# DEMANDE DE BREVET EUROPEEN

(11) **EP 2 887 160 A2**
(43) Date de publication de la demande: **24.06.2015**
(21) Numéro de dépôt: 14197353.7
(22) Date de dépôt: 11.12.2014
(51) Int. Cl.: G04C 17/00, G04G 15/00, G06Q 10/10

(54) **Horloge à indication de plages temporelles, perfectionnée**

(30) Priorité: 23.12.2013 FR 1363386
(71) Demandeur: Orange, 75015 Paris (FR)
(72) Inventeur: Mit, Frédéric, 75018 PARIS (FR); Nunez Balcells, Xavier, 75015 ISSY LES MOULINEAUX (FR); Fauchoux, Fabrice, 22700 LOUANNEC (FR)
(74) Mandataire: Cabinet Plasseraud

(57) **Abrégé**

L'invention concerne un dispositif d'horloge comportant :
- un moteur (14) de déplacement d'un organe physique destiné à indiquer une heure courante, le long d'un premier trajet (IT),
- une entrée (10) de données numériques, pour recevoir des données (DAT) programmées sur au moins une succession de plages temporelles,
- un écran (SCR), comportant un bord (B0) agencé en regard du premier trajet, pour un affichage numérique :
o de la succession de plages temporelles selon un deuxième trajet (PLT1), l'affichage des plages temporelles respectant une échelle temporelle de déplacement de l'organe physique, et
o d'un curseur virtuel (CUR), aligné sur un axe croisant à la fois le premier trajet et le deuxième trajet, et

- un processeur (11) pour piloter l'affichage sur l'écran et synchroniser un mouvement du curseur virtuel sur l'écran avec un mouvement de l'organe physique.

## Description

La présente invention concerne un dispositif d'horloge.

Plus particulièrement, elle concerne un dispositif d'horloge comportant un moteur apte à déplacer mécaniquement un organe physique (une aiguille par exemple) indiquant une heure courante, ainsi qu'une succession de plages temporelles qui peuvent correspondre par exemple à une succession de tâches planifiées.

On connaît une horloge murale de ce type, avec un moteur apte à mouvoir mécaniquement une ou plusieurs aiguilles en rotation, ainsi qu'une projection d'une succession de tâches planifiées d'un individu, au cours d'une journée particulière. Toutefois, dans ce dispositif d'horloge, la corrélation entre l'heure courante et une tâche en cours manque de précision. Par ailleurs, un tel dispositif ne peut représenter, par construction, qu'une seule succession de plages temporelles, alors qu'il peut être avantageux de représenter plusieurs successions de plages temporelles concomitantes (par exemple des tâches planifiées respectivement par plusieurs personnes, ou encore des tâches planifiées par une même personne mais sur différentes journées successives).

La présente invention vient améliorer la situation.

Elle propose à cet effet un dispositif d'horloge comportant :
- un moteur de déplacement d'un organe physique destiné à indiquer une heure courante, le long d'un premier trajet,
- une entrée de données numériques, pour recevoir des données programmées sur au moins une succession de plages temporelles,
- un écran, comportant un bord agencé en regard du premier trajet, pour un affichage numérique :
   ∘ de la succession de plages temporelles selon un deuxième trajet, l'affichage des plages temporelles respectant une échelle temporelle de déplacement de l'organe physique, et
   ∘ d'un curseur virtuel, aligné sur un axe croisant à la fois le premier trajet et le deuxième trajet, et
- un processeur pour piloter l'affichage sur l'écran et synchroniser un mouvement du curseur virtuel sur l'écran avec un mouvement de l'organe physique.

Ainsi, selon une particularité de l'invention, l'affichage d'un curseur sur l'écran croisant à la fois le premier trajet de l'organe physique et le deuxième trajet de la succession de plages temporelles permet à un utilisateur d'établir immédiatement une corrélation entre une heure courante et une tâche en cours.

Dans une forme de réalisation, les premier et deuxième trajets peuvent être parallèles entre eux et perpendiculaires à l'axe du curseur.

On comprendra alors qu'il est possible, notamment dans cette forme de réalisation, d'afficher plusieurs successions de plages temporelles concomitantes (par exemple de plusieurs personnes) et bénéficier ainsi d'un affichage d'une corrélation d'une heure courante avec chaque tâche en cours de chaque personne.

Bien entendu, l'affichage d'une succession de plages peut se représenter le long d'une ligne, ou encore d'un arc de cercle, ou autres, l'essentiel étant que le curseur virtuel croise à la fois le trajet de l'organe physique et un trajet d'une succession de plages.

Ainsi, il est possible de représenter plusieurs plages temporelles concomitantes et, dans une telle réalisation, l'écran est agencé pour afficher une pluralité de plages temporelles concomitantes, le long de trajectoires respectives parallèles entre elles.

On comprendra alors que le terme «parallèles entre elles» fait référence à des successions de plages selon des trajets non-sécants, par exemple linéaires (selon des droites parallèles entre elles), ou encore en arcs de cercle (par exemple concentriques), ou autres.

Dans une réalisation possible, les données programmées peuvent être des données d'agendas d'une personne au moins et l'écran est agencé pour afficher une succession de plages temporelles correspondant à des tâches planifiées par cette personne. Une plage temporelle occupée de l'agenda, et incluant l'heure courante (ce qui correspond alors à une tâche normalement en cours de cette personne), peut alors être affichée avec un zoom et/ou une surbrillance pour être mise en évidence, outre le fait que le curseur croise cette plage courante.

Dans cette réalisation, le processeur est agencé pour piloter en outre l'affichage sur l'écran de l'heure courante, au voisinage d'une intersection entre le curseur et la plage temporelle occupée.

Ainsi, l'heure courante, indiquée déjà par l'organe physique, est affichée encore dans l'écran.

Dans une réalisation alternative ou complémentaire de l'affichage d'agenda, le dispositif d'horloge peut comporter un récepteur de signal de radio et un sélecteur de stations de radio. En particulier, les données programmées sont des données de programmes d'au moins une station radio et l'écran est agencé pour afficher au moins une succession de plages temporelles correspondant aux programmes successifs de la station radio. Dans cette réalisation, une plage temporelle d'une station radio en cours d'écoute, et incluant l'heure courante, peut être affichée avec un zoom et/ou une surbrillance.

En complément ou en variante, dans une réalisation où le dispositif d'horloge comporte un récepteur de signal de radio et un sélecteur de stations de radio, les données programmées peuvent être des données de programmation d'une pluralité de stations radios et l'écran est agencé pour afficher une pluralité de plages temporelles concomitantes correspondant aux programmes respectifs des stations radios. Dans cette réalisation en particulier, l'écran peut être tactile, et la sélection tactile d'une plage temporelle à venir d'une station radio provoque la programmation du sélecteur pour sélectionner une station radio à un instant de début de la plage temporelle sélectionnée.

Ainsi, dans cette réalisation, les plages temporelles successives qui sont affichées sont celles de programmes de différentes stations radio et l'utilisateur sélectionne sur l'écran tactile les futurs programmes qu'il souhaite écouter ultérieurement.

On comprendra ainsi qu'il est possible pour un utilisateur de sélectionner tout un ensemble de programmes à venir, successifs, et permettre ainsi à l'utilisateur d'écouter successivement les programmes radios préalablement sélectionnés. Bien entendu, dans cette forme de réalisation, le dispositif comporte en outre des moyens de restitution sonore (un ou plusieurs baffles, etc.).

La présente invention vise aussi un programme informatique comportant des instructions pour synchroniser l'affichage d'un mouvement du curseur virtuel sur l'écran d'un dispositif d'horloge du type ci-avant, avec un mouvement de l'organe physique de ce dispositif, lorsque ces instructions sont exécutées par le processeur du dispositif.

D'autres avantages et caractéristiques de l'invention apparaîtront à la lecture de la description détaillée d'exemples de réalisation de l'invention, et à l'examen des dessins annexés sur lesquels :
- la figure 1 illustre le dispositif d'horloge selon une première forme de réalisation de l'invention, affichant des successions de plages temporelles issues, d'agendas respectifs d'utilisateurs,
- la figure 2 illustre le dispositif d'horloge selon une deuxième forme de réalisation de l'invention, affichant des successions de plages temporelles, issues de programmes de stations radios respectives,
- la figure 3 illustre un organigramme d'un algorithme général d'un programme informatique au sens de l'invention.

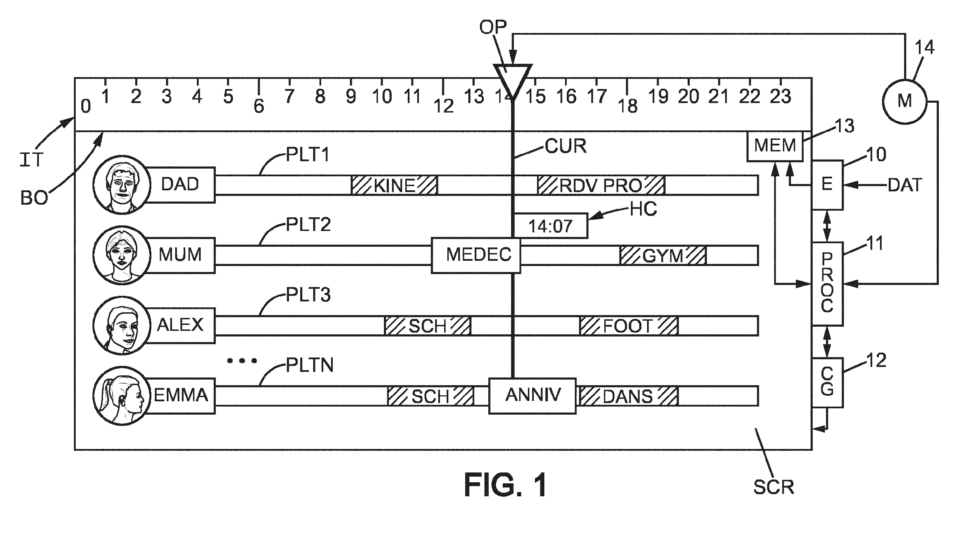

On se réfère tout d'abord à la figure 1 sur laquelle un dispositif d'horloge au sens de l'invention comporte un moteur 14 apte à mettre à l'organe physique OP (telle qu'une aiguille) en mouvement (linéaire dans l'exemple représenté), le long d'une trajectoire IT donnant une indication temporelle d'une heure courante. La position courante de l'organe physique OP est communiquée à un processeur 11 qui pilote, dans l'exemple représenté, une interface graphique 12 pour commander un affichage numérique sur l'écran SCR que comporte le dispositif d'horloge au sens de l'invention. En particulier, l'écran SCR est accolé au bord BO d'une réglette portant des graduations indiquant une succession d'heures 0, 1, 2, ..., 23 et définissant le trajet de l'organe physique OP le long de cette réglette.

En outre, le processeur 11 pilote un affichage numérique sur l'écran SCR d'un curseur virtuel CUR qui est placé sur l'écran dans le prolongement de l'organe physique OP et qui s'étend perpendiculairement au trajet de l'organe physique OP le long de la réglette IT.

Le dispositif comporte en outre une interface d'entrée 10 pour recevoir, dans ce mode de réalisation, des données d'agendas DAT de différents utilisateurs du dispositif d'horloge. Par exemple, cette interface d'entrée 10 peut être connectée à un récepteur GSM, UMTS, ou autres, pour recevoir des plages d'agendas issus de terminaux des utilisateurs du dispositif. Ainsi par exemple, un utilisateur peut entrer dans son terminal une plage horaire future pendant laquelle il aura une activité particulière et ces données sont transmises de son terminal à l'interface d'entrée 10, puis stockées dans une mémoire 13 du dispositif.

Ainsi, pour un utilisateur donné (« DAD » par exemple), il est possible de recevoir par l'interface d'entrée 10 des données d'une succession PLT1 de plages temporelles issues de l'agenda électronique du terminal de cet utilisateur DAD. Le processeur 11 lit alors le contenu de la mémoire 13 et pilote l'interface graphique 12 pour commander un affichage sur l'écran SCR de la succession de plages temporelles de cet utilisateur DAD. Il s'affiche alors sur l'écran les plages horaires occupées pour cet utilisateur, entre des instants de début et de fin d'occupation (par exemple « KINE » entre 9:00 et 11:30, « RDV PRO » entre 15:00 et 18:30 , etc.). Avantageusement, l'interface d'entrée 10 est agencée pour recevoir d'autres données d'agendas d'autres utilisateurs, afin d'afficher ainsi une pluralité de successions de plages temporelles PLT1, PLT2, PLT3,..., PLTN, chacune propre à un utilisateur.

Avantageusement, ces différentes successions de plages temporellesPLT1, PLT2, PLT3,..., PLTN sont affichées le long de trajets respectifs parallèles entre eux et parallèles aussi à la réglette IT, de sorte que le curseur virtuel CUR est perpendiculaire à la fois à la réglette IT et aux trajets des différentes successions de plages temporelles. Ainsi, le curseur CUR croise à la fois le trajet de l'organe physique OP et le (ou les) trajet(s) d'une (ou des) succession(s) de plages temporelles qu'affiche l'écran SCR.

Dans l'exemple de la figure 1, il apparaît que pour l'utilisateur MUM dont les plages d'occupation sont représentées le long de la succession de plages PLT2, l'heure courante HC est comprise dans une plage temporelle « MEDEC », d'occupation de cet utilisateur MUM. Par exemple, dans cette illustration, la mère de famille MUM a un rendez-vous chez un médecin entre 11:30 et 14:30, ce qui inclut l'heure courante 14:07. Dans cette situation, la plage temporelle occupée MEDEC est représentée avec une mise en valeur (par exemple avec un zoom dans l'exemple de la figure 1, et éventuellement une surbrillance), ce qui permet aux autres utilisateurs du dispositif de visualiser immédiatement l'occupation en cours de l'utilisateur MUM. De même, l'utilisateur EMMA a une tâche planifiée « ANNIV » dans une plage temporelle incluant l'heure courante 14:07. Cette plage temporelle est alors mise aussi en évidence avec un zoom dans l'exemple de la figure 1 (et éventuellement une surbrillance).

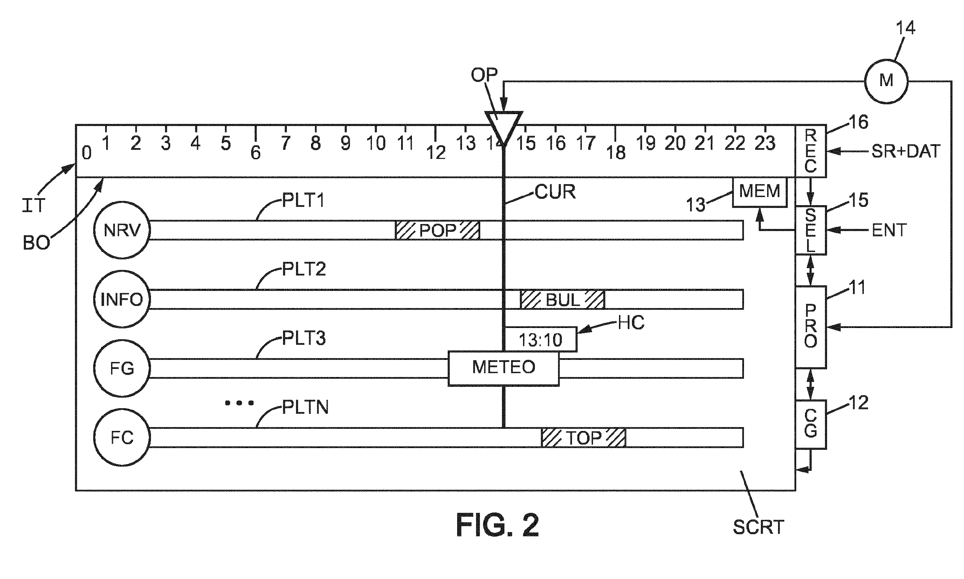

On se réfère maintenant à la figure 2, sur laquelle on a représenté une variante de réalisation dans laquelle les successions des plages temporelles PLT1, PLT2, PLT3, ..., PLTN correspondent maintenant à des données de programmation de stations radios, dans une réalisation où le dispositif d'horloge est un poste radio comportant, outre des moyens de restitution sonore (non représentés) :
- un récepteur radio 16, apte à recevoir un signal de radio SR (par ondes radiofréquences),
- un sélecteur de station radio 15 (de type syntoniseur par exemple), pour sélectionner le programme d'une station radio particulière à faire jouer par des moyens de restitution sonore.

En particulier, le dispositif peut comporter un moyen de réception de données DAT de programmes futurs (par exemple des métadonnées reçues dans un flux radiofréquence), ce qui permet d'afficher une succession de plages temporelles pour chaque station radio qu'un utilisateur du dispositif a l'habitude d'écouter. Par exemple, cet utilisateur peut sélectionner N stations radios pour lesquelles il souhaite un affichage des programmes. Cette information est mémorisée dans une mémoire 13 du dispositif et le processeur 11 coopère avec cette mémoire pour piloter l'interface graphique 12 de manière à commander un affichage des successions respectives PLT1, PLT2, PLT3, ..., PLTN de plages temporelles correspondant aux programmes respectifs de ces N stations radios. En outre, dans cette réalisation, l'écran du dispositif d'horloge est un écran tactile SCRT et l'utilisateur peut, en appuyant sur des plages temporelles particulières qu'affiche l'écran, sélectionner des programmes correspondants futurs. Ces données ENT, entrées par l'utilisateur, sont alors stockées dans la mémoire 13 et le processeur 11 pilote le sélecteur de radio 15 pour lire le contenu de la mémoire 13 et récupérer les données ENT, afin de sélectionner une station radio à un instant correspondant au début du programme de cette radio, ce programme ayant été préalablement choisi par l'utilisateur et ce choix ayant été préalablement stocké dans la mémoire 13.

Ainsi, une succession de programmes de différentes stations radios peut être présélectionnée puis jouée par des moyens de restitution sonore du dispositif d'horloge.

En outre, on remarque sur la figure 2 que l'organe physique OP se « prolonge » sur l'écran SCRT par le curseur CUR, orthogonal à la course de l'organe physique OP le long de la réglette IT, et des successions de plages PLT1, ..., PLTN. En particulier, si le curseur croise une plage horaire courante (« METEO ») correspondant à un programme en cours d'écoute (par exemple un bulletin météorologique), cette plage horaire s'affiche avec un effet de mise en évidence (par exemple un zoom et/ou une surbrillance). En outre, l'heure courante HC s'affiche à proximité du curseur CUR et de cette plage en cours « METEO ».

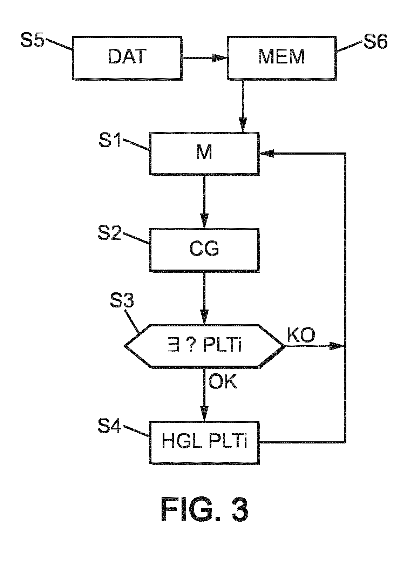

On a représenté sur la figure 3 les principales étapes mises en oeuvre lors de l'exécution d'un programme informatique, lorsque ses instructions sont lues par un processeur 11 du dispositif au sens de l'invention. Ainsi, sur réception à l'étape S1 de données de position du moteur 14, le processeur renvoie une consigne d'affichage à l'interface graphique 12, à l'étape S2, pour piloter l'affichage du curseur CUR dans le prolongement de l'organe physique OP. Par ailleurs, dans une forme de réalisation particulière, si les pixels d'affichage du curseur CUR recouvrent partiellement au moins une plage temporelle PLTi, au test S3, alors une consigne d'affichage avec un effet de mise en évidence de cette plage temporelle PLTi (zoom et/ou surbrillance) est transmise à l'interface graphique 12, à l'étape S4. Bien entendu, ces étapes S1 à S4 sont précédées par une étape S5 de réception de données DAT de plages temporelles (via une interface d'entrée 10 comme illustré sur la figure 1, ou via un récepteur 16 de métadonnées comme illustré sur la figure 2) qui peuvent être mémorisées à l'étape S6 dans la mémoire 13 du dispositif, en vue d'un affichage sur l'écran sous la forme d'une ou plusieurs successions de plages temporelles PLT1,...,PLTN.

Bien entendu, la présente invention ne se limite pas aux formes de réalisation décrites ci-avant à titre d'exemple. Elle s'étend à d'autres variantes.

Ainsi par exemple, on a représenté sur les figures 1 et 2 une évolution des plages temporelles selon des trajets linéaires. Néanmoins, en variante, ces trajets peuvent être courbes (en arcs de cercle, en vaguelettes, ou autres), l'essentiel étant que le curseur CUR croise à la fois la course de l'organe physique OP et les évolutions des plages temporelles précitées.

Par ailleurs, on a décrit ci-avant un sélecteur de station radio 15 piloté par un écran tactile. Une telle réalisation est néanmoins possible aussi pour une sélection de programmes de télévision, ou plus généralement de tout autre type d'événements futurs pouvant être représentés par une succession de plages temporelles. On peut citer à titre d'exemples supplémentaires des programmations de musiques diffusées par Internet en mode « streaming » (par exemple sur Deezer®) ou encore de programmes vidéos (par exemple sur « la TV d'Orange » ®).

## Revendications

1. Dispositif d'horloge comportant :
- un moteur (14) de déplacement d'un organe physique destiné à indiquer une heure courante, le long d'un premier trajet (IT),
- une entrée (10) de données numériques, pour recevoir des données (DAT) programmées sur au moins une succession de plages temporelles,
- un écran (SCR), comportant un bord (B0) agencé en regard du premier trajet, pour un affichage numérique :
o de la succession de plages temporelles selon un deuxième trajet (PLT1), l'affichage des plages temporelles respectant une échelle temporelle de déplacement de l'organe physique, et
o d'un curseur virtuel (CUR), aligné sur un axe croisant à la fois le premier trajet et le deuxième trajet, et
- un processeur (11) pour piloter l'affichage sur l'écran et synchroniser un mouvement du curseur virtuel sur l'écran avec un mouvement de l'organe physique.

2. Dispositif selon la revendication 1, dans lequel les premier et deuxième trajets sont parallèles entre eux et perpendiculaires à l'axe du curseur.

3. Dispositif selon l'une des revendications 1 et 2, dans lequel l'écran est agencé pour afficher une pluralité de plages temporelles concomitantes, le long de trajectoires (PLT1, ..., PLTN) respectives parallèles entre elles.

4. Dispositif selon l'une des revendications précédentes, dans lequel les données programmées sont des données d'agendas d'au moins une personne et l'écran est agencé pour afficher une succession de plages temporelles correspondant à l'agenda de la personne,
et dans lequel une plage temporelle occupée d'un agenda (PLT2), et incluant l'heure courante, est affichée avec un zoom et/ou une surbrillance.

5. Dispositif selon la revendication 4, dans lequel le processeur est agencé pour piloter en outre l'affichage sur l'écran de l'heure courante (HC), à une intersection entre le curseur et ladite plage temporelle occupée.

6. Dispositif selon l'une des revendications précédentes, comportant en outre un récepteur (REC) de signal de radio et un sélecteur (SEL) de stations de radio, dans lequel les données programmées sont des données de programmes d'au moins une station radio et l'écran est agencé pour afficher une succession de plages temporelles correspondant aux programmes successifs de la station radio,
et dans lequel une plage temporelle d'une station radio en cours d'écoute, et incluant l'heure courante, est affichée avec un zoom et/ou une surbrillance.

7. Dispositif selon l'une des revendications précédentes, comportant en outre un récepteur (REC) de signal de radio et un sélecteur (SEL) de stations de radio, dans lequel les données programmées sont des données de programmes d'une pluralité de stations radios et l'écran est agencé pour afficher une pluralité de plages temporelles concomitantes correspondant aux programmes respectifs desdites stations radios,
et dans lequel l'écran est un écran tactile (SCRT), et la sélection tactile d'une plage temporelle à venir d'une station radio provoque la programmation du sélecteur pour sélectionner une station radio à un instant de début de la plage temporelle sélectionnée.

8. Programme informatique comportant des instructions pour synchroniser l'affichage d'un mouvement du curseur virtuel sur l'écran d'un dispositif selon l'une des revendications précédentes, avec un mouvement de l'organe physique dudit dispositif, lorsque lesdites instructions sont exécutées par le processeur du dispositif.
